# EUROPEAN PATENT SPECIFICATION

(11) **EP 0 555 212 B1**
(45) Date of publication and mention of the grant of the patent: **12.10.1994**
(21) Application number: 91900981.1
(22) Date of filing: 31.10.1990
(51) Int. Cl.: G01N 21/51, G01N 33/48

(54) **FERTILITY ANALYZER**
FRUCHTBARKEITSANALYSEGERÄT
ANALYSEUR DE FECONDITE

(43) Date of publication of application: 18.08.1993
(73) Proprietor: BIOPHOS MEDICAL AB, S-114 86 Stockholm (SE)
(72) Inventor: RIGLER, Rudolf, S-182 36 Danderyd (SE)
(74) Representative: Forssell, Gunilla
(86) International application number: SE9000707
(87) International publication number: WO9208122

(56) References cited:
- EP-A- 0 069 092
- US-A- 4 601 578
- US-A- 4 896 967
- Derwent's abstract, No. 88-197 395/28, SU 1 362 430, publ. week 8828 MEDICINE TECH RES
- Derwent's abstract, No. 85-294 617/47, SU 1 154 619, publ. week 8547 MEDICAL TECHNIQUES
- Med. & Biol. Eng. & Comput, Vol. 20, March 1982 G.P. Naylor et al: "Apparatur for the study of motile sperm using microprocessoranalysis of scattered laser light", see page 207 - page 214
- Med. & Biol. Eng. & Comput, Vol. 23, May 1985 J.C. EARNSHAW et al: "Automated laser light scattering system for assessment of sperm motility", see page 263 - page 268
- In "laser"-Proceedings of the International Congress on Laser in Medicine and Surgery, Bologna, June 1985, (ed. G. GALLETTI), "Translational and Rotational Swimming of Humen Spermatozoa, Maxwell Speed Distributions in the Analysis of Dynamic Laser Light Scattering" (PER THYBERG ET AL), 1986, pp 105-110 cited in the application
- Cytometry, Vol. 5, pages 327-332, (1984) "Rotational and Translational Swimming of Human Spermatozoa: A Dynamic Laser Light Scattering Study", (RUDOLF RIGLER ET AL) cited in the application

## Description

### BACKGROUND OF THE INVENTION

This invention relates to a fertility analyzer.

Analyzing mobility and number of spermatozoa is of importance in order to judge the spermatozoa fertility features. Most often nowadays video registration of the spermatozoa movements is used together with computer based analyzing of individual trajectories.

According to a known method, discussed in US patent No. 4,601,578, a sperm sample is illuminated by a laser beam and a spectral analysis is made of the laser light scattered from the sample. The signal is transferred through filters and integrators and an output pulse is given each time an integrator is saturated. The saturation pulses are counted. The sample is illuminated by an approximately collimated laser light. The light scattered from the sample is transferred to a detector through a semicircular aperture in a disc and a focusing lens. By this known method only an unspecified sperm motility is detected just to give a general idea of the percentage living sperms in a sample.

However, the fertility is determined by a lot of different features of the spermatozoa, of which the most essential are the translational speed and the rotational frequency, and a quite specified sperm motility value being the ratio between the translational speed and the rotational frequency.

A few years ago a new method has been developed by a team in which the inventor of this invention was a participant. According to that method the spermatozoa mobility is measured by analyzing light, which is scattered or emitted when the spermatozoa are illuminated with a laser beam. This method is described in the Articles "Rotational and Translational Swimming of Human Spermatozoa: A Dynamic Laser Light Scattering Study", by Rigler, R. & Thyberg, P., Cytometry 5:327-332 (1984) and "Translational and Rotational Swimming of Human Spermatozoa: Maxwell Speed Distribution in the Analysis of Dynamic Laser Light Scattering", by Rigler, R. & Thyberg, P., In "Laser ", ed G. Galetti, p. 105, Monduzzi Editore. Bologna (1986). According to these articles, the disclosure of which are enclosed in the specification as APPENDIX, the mobility of the spermatozoa gives rise to fluctuations of the scattered light with a frequency related to the translational speed and the rotational frequency of the spermatozoa. The translational speed (in µm/sec) and the rotational frequency (in Hz) for an extensive population of spermatozoa are determined by computer aided Fourier transform analysis of the fluctuation spectrum of the spermatozoa using the light emitted in two directions from a spermatozoa sample illuminated by a laser beam.

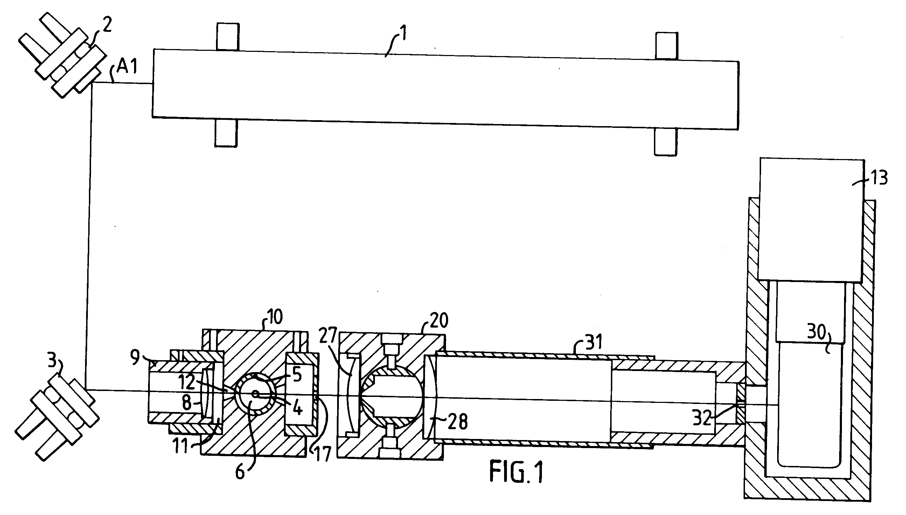

The experimental set-up for the measurement of polarized and depolarized dynamic laser light scattering at various angles in a plane perpendicular to the extension of a tube containing the spermatozoa sample shown in the articles mentioned above has not been adapted for clinical analyzes. The experimental set-up shown in FIG 1 in the articles includes an analysing arrangement including a lots of components, and the whole arrangement is moved along a circular path around the sample. The arrangement is thus quite clumsy including heavy parts to be moved.

Therefore, the main object of the invention has been to provide an apparatus based on the theories described in the articles but adapted to be a complete instrument easy to handle to be put on the market.

### SUMMARY OF THE INVENTION

In accordance with the principles of the present invention there is provided fertility analyzer according to claim 1.

The separating means may include said second lens means being comprised of a first part providing a collimated light beam and followed by a second part providing said focusing of the beam on said detecting means, and said first diaphragm means being provided in said collimated light beam between the first and second part of said second lens means and having a diaphragm opening disposable along a line lying in said plane, and said light detecting means includes a detector element placed on the optical axis of said second lens means.

The first diaphragm means may include one dispensable part having several diaphragm openings provided along its disposal direction and one stationary part having openings adapted to said diaphragm openings such that it for every chosable position of said first part all diaphragm openings except one are covered for the beam outgoing from said sperm sample.

The separating means may include said second lens means being comprised of a first followed by a second part, said first part providing an image of said sample between said first and said second part; and said first diaphragm means having its diaphragm opening provided at said image, and said light detecting means includes an array of detector elements provided along a line parallel to said capillary, each detector element providing said second diaphragm for itself.

The separating means may include a mirror in said first optical means provided oblique to the beam path of the beam coming from said laser directing the beam path impinging to said first lens means parallel to the optical axis of said first lens means, said first lens means having its focus in said capillary thus directing the beam path of the laser beam to a point on the optical axis inside the capillary; and said separating means may also include a diaphragm opening placed to determine the coherence area of the beam scattered from the capillary along the optical axis of the first and second optical means; and said light detecting means is a single detector element and said first and second diaphragm means in said second optical means are diaphragm openings disposed between the second lens means and said detector element.

Preferably, at least one opening in the second diaphragm means is arrangeable to have a size transmitting a substantial number of coherence areas, and the signal processing device is adapted to compute the number of sperms per volume unit by aid of autocorrelation of a series signal samples recorded during a predetermined time having the large sized diaphragm area in a predetermined position.

The signal processing device preferably controls the separating means in accordance with a measuring program to automatically in a prescribed order provide prechosen space areas of the beam outgoing from the sperm sample for recording of signal samples during prescribed times.

Other objects and advantages of the invention will be apparent from the following description, the accompanying drawings and the appended claims.

### BRIEF DESCRIPTION OF THE DRAWINGS

- FIG. 1: shows a view from above of an embodiment of the instrument according to the invention,
- FIG. 2: shows a side view of the instrument shown in FIG. 1,
- FIG. 3: shows schematically the beam path in a variant of the embodiment shown in FIGs 1 and 2,
- FIG. 4A, 4B, 4C: shows an embodiment of a displacable diaphragm device in the embodiment of the instrument according to the invention shown in FIG 3,
- FIG. 5: shows schematically the beam path in a second embodiment of the instrument according to the invention,
- FIG. 6: shows schematically the beam path in a third embodiment of the instrument according to the invention

### DESCRIPTION OF THE PREFERRED EMBODIMENTS

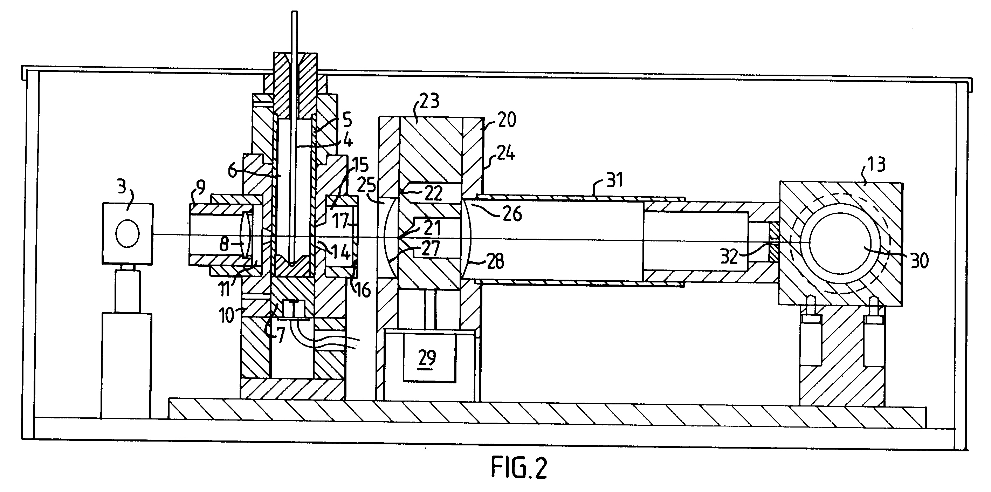

In the set-up shown in FIGs 1 and 2, a laser 1, for instance a HeNe laser, emits a laser beam Al. The laser beam Al is bent 180° by two mirrors 2 and 3 each bending it 90°, i.e. being placed 45° to the beam path. The sperm sample is placed in a glass capillary 4. The glass capillary 4 is contained centrally in a larger thermostated glass tube 5 filled with a fluid 6, the refraction index of which being practically the same as the refractive index of the glass material of the glass capillary 4, at least at the operating temperature, in order to prevent stationary local reflections. The glass tube 5 is situated in a housing 10 and is warmed by a heater (not shown), and a temperature sensor T is provided in a thermally conducting block 7 being in thermal contact with the tube 5. The heater is thermo regulated by aid of the sensor T in a way wellknown in the art and therefore not further described. The specific mechanical construction of the housing is not a part of the invention in itself and will therefore not be described in detail. The essential is that the liquid surrounding the capillary 4 is kept at a constant temperature, preferably slightly below 37°C.

The laser beam is focused on the sperma sample by a lens 8 placed quite near to the tube 5 in a tube 9 having a black, lustre-less inner surface and provided in the wall of the housing 10 perpendicular to the tube 5. The beam is transferred from the lens 8 to the capillary 4 through a filtering plate 11, a conical opening 12 having its wider end towards the plate 11, the wall of the tube 5 and the fluid 6. The filtering plate 11 is preferably a passband filter transmitting a narrow band around the laser wavelength.

The light beam is scattered by the sperms in the capillary 4. Light spread in different angles in an angular region in a plane containing the capillary axis and the optical axis of the laser beam is to be examined. This scattering plane has been chosen in the embodiment shown in FIGs 1 and 2 because the capillary 4 should preferably be placed vertically extended and the instrument can be made very compact taking as little area as possible horizontally if all moving parts are to be moved in a vertical direction. However, the beam scattered from the sample in a plane perpendicular to the capillary could be indicated instead (not shown). The essential is that a plane having space symmetry is chosen, i.e. a plane including the capillary axis or a plane perpendicular to it.

In the embodiment shown in FIGs 1 and 2, the light from the capillary 4 is transferred to a detector device 13, preferably including a one-photon detector, through firstly a conical opening 14 in the housing 10 open to a cylindrical short tube 15 having black, lustre-less innerwalls and being closed at its outer end by a plate 16 having an elongated opening 17 in the same direction as the capillary 4 and secondly a diaphragm device 20 having two pinholes 21 and 22 provided in a column 23 displacable in the direction of the capillary 4 within a housing 24 having a cylindrical opening 25 turned to the capillary 4 and another cylindrical opening 26 in the wall just opposite the wall with the opening 25, the diaphragm device cooperating the opening 17 in such a way that only one opening at the time is opened for the light beam outgoing from the sample. A lens 27 is provided in the opening 25 and a lens 28 in the opening 26. A first polarizer may be placed at the open end of the tube 9 in case of measurement with polarized light, and then a second polarizer could be placed at the output of the diaphragm device 20.

The column 23 with the pinholes is positioned by a stepping motor 29 which is controlled by a computer (not shown), such as a PC (personal computer), which also is connected to the detector device 13. The intensity of the scattered laser light is measured at various angles by moving the pinholes. The computer performs data sampling and analysis.

The measured light scattered in predetermined angular directions from the sample is measured by single photon counting in a detector 30 in the device 13. A closed path including a tube means 31 having a black, lustreless innerwall is situated between the diaphragm device 20 and the detector 30 in order to minimize the influence of possible stray light. The tube means 31 is provided by two periscopating tubes in order to make it able to adjust the distance between the devices 20 and 13. The tube means 31 is not absolutely necessary. A pinhole diaphragm 32 is provided in front of the detector 30 at the focus of the lens 28. Since the lens 27 is focused on the capillary 4, then an image of the pinhole 32 is provided on the capillary. As will be further explained below the pinhole 32 determines the volume element of the sample to be examined, and the diaphragm 48 determines the coherence area of the scattered light.

Intensity fluctuations caused by the sperm motion are stored in a memory in the computer. A fast processor is used to calculate an autocorrelation function in the way described in the articles enclosed as APPENDIX and to display this function on a screen. Translational velocities and rotational frequences as well as distribution functions are calculated from the autocorrelation functions measured at different angles. In order to separate the translational velocity v from the rotational frequency f the coherent light scattered in two different angular directions is measured and then preferably in 2° and 30°. The angular directions for each measurement are provided by aids of the diaphragm device 20 in a way which will be described further below.

In the embodiment shown in FIGs 1 and 2 the detector 30 is a one-photon detector. The signals from the detector 30 is transferred to the signal processor, which calculates the autocorrelation and stores it in the memory connected to the processor.

The translation speed v must be separated from the rotational frequency f. In order to achieve this the coherent laser light scattered in different angles is measured. A volume element has to be defined in order to achieve coherently scattered photones. The best way to do this is to make a reduced image of a pinhole on the sample, such as an image of the pinhole 32 on the capillary 4 in the embodiment shown in FIGs 1 and 2. Another demand to achieve this is to have an aperture diaphragm which decides the observed space angle and hence the coherence area, such as by the diaphragm 21 or 22 in the embodiment shown in FIGs 1 and 2.

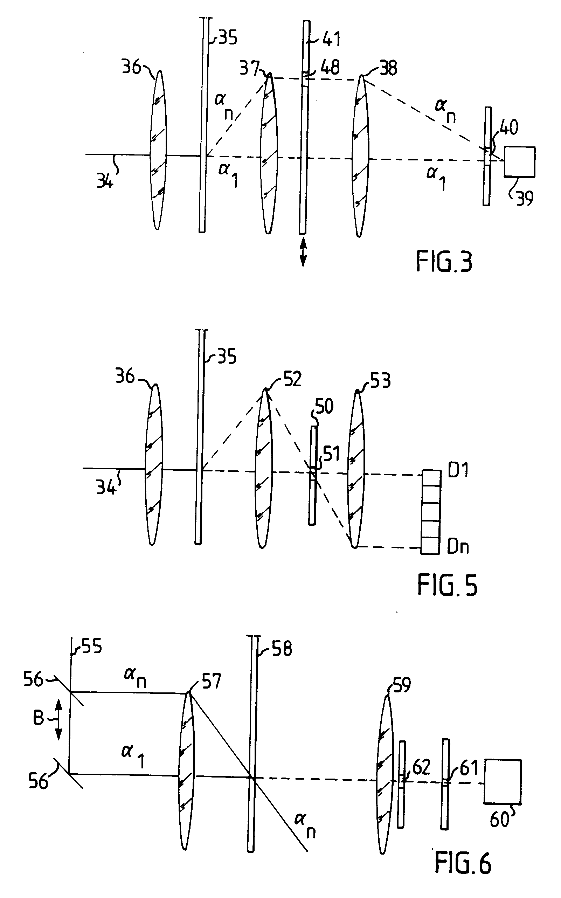

Three embodiments to make this are schematically illustrated in FIGs 3, 5 and 6.

The one shown in FIG 3 is a variant of the one illustrated in FIGs 1 and 2. The laser beam 34 is focused on the sample in the capillary 35 by a first lens 36. The divergent light beam from the sample, which is scattered in different directions, for instance α₁ and αₙ, is collimated by a second lens 37 and is then, by a third lens 38, focused on a detector 39 through a pinhole 40. The pinhole 40 determines the volume element of the sample to be monitored. A displaceable diaphragm 41 having at least one pinhole is placed between the lenses 37 and 38 which makes it confocal. This makes it possible to make a measurement of the laser light scattered in different angles by moving the displaceable pinhole diaphragm. The size of the diaphragm determines the space angle of the scattered beam outgoing from the monitored sample, i.e. the coherence area.

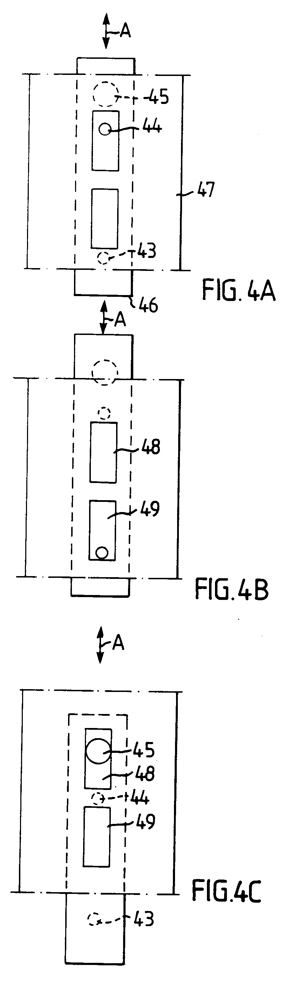

An embodiment of the diaphragm device having a displaceable diaphragm is shown in different positions in FIGs 4A, 4B and 4C. The non-coherent light scattering must be measured in order to obtain information of the number N of moving sperms in the sample, as will be further explained below. This measurement is made by having a diaphragm of such a size that the number of coherence areas is very great. Therefore the displaceable, confocal diaphragm device is made such that coherent as well as non-coherent scattered light can be measured for different angles by a combination of small (for coherent light) and large (for non-coherent light) apertures 43, 44, 45 provided on an aperture device 46 displaceable in the direction of the arrow A and a stationary mask device 47 placed in front or behind the aperture device. The mask device has large apertures 48 and 49 having such positions and sizes that only one diaphragm aperture 43, 44 or 45 can be provided for the light from the sample at the time for the angle for which measurements are to be made. The apertures 43 and 44 being pinholes providing only one coherence area and the aperture 45 having a size covering a great number of coherence areas.

According to a second embodiment of the invention shown in FIG 5 a stationary diaphragm 50 is provided having a pinhole 51 placed on the optical axis of two lenses 52 and 53 placed on each side of it. The lens 52 focuses the image of the sample at the pinhole 51. The pinhole 51 is the volume determining element. The lens 53 has the pinhole 51 in its focal plane such that it collimates the beam from the pinhole. The collimated beam impinges on an array of light detectors Dl to Dn. Even though a row of light detectors is shown it is apparent that the detector array may be composed by detectors only provided at the places hit by the light scattered in the actual angular directions to be checked, i.e. preferably in 2° and 30°. A displaceable detector may be used instead of the array of several detectors (not shown). The detector area may be of a size in itself acting as a pinhole or a pinhole diaphragm may be seated in front of the detector (not shown). The coherence area is determined at the detectors in the embodiment shown in FIG 5.

In the third embodiment of the invention shown in FIG 6 the impingement direction of the laser towards the sample is varied instead of the outgoing beam from the sample. The laser beam 55 impinges on a plane mirror 56 placed at 45° towards the impinging beam 55 and being displaceable in the direction of the impinging beam. i.e. in the direction of the arrow B. The mirror 56 is shown in two different positions. A lens 57 is placed in front of the sample in a capillary 58 having its focus in the sample. A lens 59 projects an image of the sample on a pinhole diaphragm 6i placed a distance away in front of a detector 60 such that only the outgoing beam from the sample along the optical axis of the lens 59 and the pinhole 61 reaches the detector 60. A diaphragm 62 determining the coherence area is provided between the lens 59 and the diaphragm 61.

The coherent scattering of light by the sample in different angles in a plane including the capillary or in a plane perpendicular to it is thus measured in order to separate the translation speed v from the rotational frequency f. The angles are chosen as discussed in the articles mentioned above. Absolute values for v and f are obtained by a non-linear parameterisation of the measured autocorrelation function according to fixed speed distribution functions, because v and f are mean values of a Maxwell-Boltzmann distribution or by parameterisation of the distribution functions for v and f, i.e. p(v) and p(f), using different algoritms.

The absolute number N of movable sperms in a defined volume element can be determined from the amplitude of the autocorrelation function for the non-coherent scattering. This can be made by using the aperture 45 in the aperture device shown in FIGs 4A to 4C. It is to be observed that each diaphragm determining the coherence area may be exchangeable to have an area only covering about one coherence area or a great number of coherence areas.

In order to be able to make measurements in a large scale a method must be used which permits catching of sperms in seminal liquid in another simple way easy to handle. The capillary 4 shown in FIGs 1 and 2 can be used for this purpose. The capillary is a tube preferably having a diameter of appproximately 1 mm. The sperm liquid is sucked into the capillary. Thereafter the bottom of the capillary is sealed by a plug of for instance wax of an appropriate type for the purpose. The capillary is then placed in a glas cylinder having a substantially larger diameter than the capillary and filled with a liquid as described above. The liquid is kept at a constant temperature by the thermostatic arrangement.

While the designs of instrument herein described constitute preferred embodiments of this invention, it is to be understood that the invention is not limited to these precise designs of instrument, and that changes may be made therein without departing from the scope of the invention as defined by the claims.

## Claims

1. Fertility analyzer, including
a. a laser beam (A1;34;55) impinging on a sperm sample in a capillary (4;35;58) having an essentially circular section;
b. a first optical means including at least a first lens means (8;36;57) focusing said laser beam in said sample;
c. a second optical means for receiving light scattered from the sperm sample including at least a second lens means (27,28;37,38;52,53;59), a first optical diaphragm means (23,22,21;41,48;50,51;62) determining the coherence area of said sample to be monitored, a second diaphragm means (32;40;detector areas of D1 to Dn;61) determining the space angle of the scattered light from said sample, and a light intensity detecting means (30;39;D1 to Dn;60);
d. a separating means included in the combination of said first and second optical means sorting out a determinable small section of said beam outgoing from said sperm sample;
f. said separating means being adapted to sort out the section of the beam in a direction lying in a plane having space symmetry in relation to said capillary, and and
e. a signal processing device (13) storing the varying signals from said light detecting means during a predetermined time separately for beams outgoing from said sperm sample, one at the time of at least two chosen outsorting conditions for which the angular relationship between the impinging beam and the outgoing, outsorted beam is different from condition to condition, computing at least two features having relation to the fertility of the sperm sample, **characterized** in that said separating means
g. includes means (23,29;41;choice of D1 to Dn;56) being displaceable to at least two predetermined places (21,22;43,44,45) along a straight moving path in order to provide the different outsorting conditions one at the time.

2. Analyzer according to Claim 1, **characterized** in that said separating means includes said second lens means (27,28;35,41) being comprised of a first part (27;35) providing a collimated light beam and followed by a second part (28;41) providing said focusing of the beam on said detecting means (39), and said first diaphragm means being provided in said collimated light beam between the first and second part of said second lens means and having a diaphragm opening (21,22;48) disposable along a line lying in said plane, and said light detecting means (39) includes a detector element placed on the optical axis of said second lens means.

3. Analyzer according to Claim 2, **characterized** in that said first diaphragm means includes one dispensable part (46) having several diaphragm openings (43 to 45) provided along its disposal direction and one stationary part (47) having openings (48′,49) adapted to said diaphragm openings such that it for every chosable position of said first part all diaphragm openings except one are covered for the beam outgoing from said sperm sample.

4. Analyzer according to Claim 1, **characterized** in that said separating means includes said second lens means (52,53) being comprised of a first followed by a second part, said first part (52) providing an image of said sample between said first and said second part; and in that said first diaphragm means (50) having its diaphragm opening (51) provided at said image, and said light detecting means includes an array of detector elements (D1 to Dn) provided along a line parallel to said capillary (35), each detector element providing said second diaphragm for itself.

5. Analyzer according to Claim 1, **characterized** in that said separating means includes a mirror (56) in said first optical means provided oblique to the beam path of the beam coming from said laser directing the beam path impinging to said first lens means parallel to the optical axis of said first lens means, said first lens means having its focus in said capillary thus directing the beam path of the laser beam to a point on the optical axis inside the capillary; and that said separating means also includes a diaphragm opening (62) placed to let through the beam scattered from the capillary along the optical axis of the first and second optical means; and in that said light detecting means (60) is a single detector element and said first and second diaphragm means in said second optical means are diaphragm openings (62,61) disposed between the second lens means and said detector element.

6. Analyser according to anyone of Claims 1 to 5,
**characterized** in a cup formed means (5) of glass containing a liquid (6) thermo regulated to a predetermined temperature and having approximately the same refractive index as the capillary at said temperature, into which cup formed means the capillary is seated.

7. Analyzer according to Claim 1, **characterized** in that said light detecting means includes at least one one-photone detector.

8. Analyzer according to Claim 2 or 3,
**characterized** in that said first diaphragm means includes several diaphragm openings, of which only one is provided in the beam path at the time; at least one of the diaphragm openings (21 or 22;43,44) in said first diaphragm means being a pinhole diaphragm leaving a size transmitting approximately one coherence area of said laser beam.

9. Analyzer according to Claim 8,
**characterized** in that at least one opening (45) in said first diaphragm means is arrangable to have a size transmitting a substantial number of coherence areas,
and in that said signal processing device is adapted to compute the number of sperms per volume unit by aid of autocorrelation of a series signal samples recorded during a predetermined time having said large sized diaphragm area in a predetermined position.

10. Analyzer according to Claim 1,
**characterized** in that said signal processing device controls said separating means in accordance with a measuring program to automatically in a prescribed order provide prechosen space areas of said beam outgoing from said sperm sample for recording of signal samples during prescribed times.

## Patentansprüche

1. Fruchtbarkeitsanalysegerät, das aufweist
a) einen Laserstrahl (A1; 34; 55), der auf eine Spermaprobe in einer Kapillare (4; 35; 58) gerichtet ist, die einen im wesentlichen kreisförmigen Querschnitt hat;
b) eine erste optische Einrichtung, die wenigstens eine erste Linseneinrichtung (8; 36; 57) aufweist, die den Laserstrahl in diese Probe focussiert;
c) eine zweite optische Einrichtung zum Empfangen des Lichts, das von der Spermaprobe gestreut wurde, die wenigstens eine zweite Linseneinrichtung (27, 28; 37, 38; 52, 53; 59), eine erste optische Diaphragma-Einrichtung (23, 22, 21; 41, 48; 50, 51; 62), die den Kohärenzbereich der zu untersuchenden Probe bestimmt, eine zweite Diaphragma-Einrichtung (32; 40; Detektorbereiche von D1 bis Dn; 61), die den Raumwinkel des gestreuten Lichts von der Probe bestimmt, und eine Lichtintensitäterfassungseinrichtung (30; 39; D1 bis Dn; 60) aufweist;
d) eine Trenneinrichtung, die in der Kombination der ersten und zweiten optischen Einrichtung enthalten ist, die einen bestimmbaren kleinen Bereich des Strahls, der von der Spermaprobe ausgeht, heraussucht;
f) wobei die Trenneinrichtung geeignet ist, den Bereich des Strahls in eine Richtung herauszusuchen, die in einer Ebene liegt, die in Bezug auf die Kapillare Raumsymmetrie hat und
e) eine Signalverarbeitungsvorrichtung (13), die die variierenden Signale von der Lichterfassungseinrichtung während einer vorbestimmten Zeit getrennt für Strahlen, die von der Spermaprobe ausgehen, sammelt, einzeln von wenigstens zwei gewählten Aussortierbedingungen, für die die winkelmäßige Beziehung zwischen dem eingehenden und dem ausgehenden, herausgesuchten Strahl von Bedingung zu Bedingung unterschiedlich ist, und die wenigstens zwei Merkmale berechnet, die eine Relation zu der Fruchtbarkeit der Spermaprobe hat,
dadurch gekennzeichnet, daß
g) die Trenneinrichtung Mittel (23, 29; 41; Wahl von D1 bis Dn; 56) aufweist, die an wenigstens zwei vorbestimmten Plätzen (21, 22; 43, 44, 45) entlang einer geraden Bewegungsstrecke bewegbar sind, um die verschiedenen Heraussuchbedingungen einzeln bereitzustellen.

2. Analysengerät gemäß Anspruch 1, dadurch gekennzeichnet, daß die Trenneinrichtung die zweite Linseneinrichtung (27, 28; 35, 41) enthält, die einen ersten Teil (27; 35) aufweist, der einen gerichteten Lichtstrahl bereitstellt und von einem zweiten Teil (28; 41) gefolgt ist, der das Focussieren des Lichtsstrahls auf der Erfassungseinrichtung (39) bereitstellt, und wobei die erste Diaphragma-Einrichtung in dem gerichteten Lichtstrahl vorgesehen ist zwischen dem ersten und dem zweiten Teil der Linseneinrichtung und eine Diaphragma-Öffnung (21, 22; 48) hat, die entlang einer Linie, die in dieser Ebene liegt verschiebbar ist, und wobei die Lichterfassungseinrichtung (39) ein Detektorelement enthält, das auf der optischen Achse der zweiten Linseneinrichtung plaziert ist.

3. Analysengerät gemäß Anspruch 2, dadurch gekennzeichnet, daß die erste Diaphragma-Einrichtung einen nicht notwendigen Teil (46) enthält, der verschiedene Diaphragma-Öffnungen (43 bis 45) hat, die entlang seiner Verfügungsrichtung vorgesehen sind, und einen stationären Teil (47), der Öffnungen (48′, 49) hat, die an die Diaphragma-Öffnungen angepaßt sind, so daß es für jede wählbare Position des ersten Teils alle Diaphragma-Öffnungen außer einer für den austretenden Strahl aus der Spermaprobe bedeckt sind.

4. Analysengerät gemäß Anspruch 1, dadurch gekennzeichnet, daß die Trenneinrichtung die zweite Linseneinrichtung (52, 53) enthält, die einen ersten, gefolgt von einem zweiten Teil aufweist, wobei der erste Teil (52) ein Bild der Probe zwischen dem ersten und dem zweiten Teil bereitstellt; und daß die erste Diaphragma-Einrichtung (50) seine Diaphragma-Öffnung (51) an dem Bild bereitgestellt hat, und die Lichterfassungseinrichtung ein Feld von Detektorelementen (D1 bis Dn) beinhaltet, die entlang einer parallelen Linie zu der Kapillare (35) vorgesehen sind, wobei jedes Detektorelement für sich selbst ein zweites Diaphragma bereitstellt.

5. Analysengerät gemäß Anspruch 1, dadurch gekennzeichnet, daß die Trenneinrichtung einen Spiegel (56) in der ersten optischen Einrichtung beinhaltet, der schräg zu dem Strahlendurchgangsstrahl vorgesehen ist, der von dem Laser kommt, der den Strahlenpfad, der auf die erste Linseneinrichtung gerichtet ist, parallel zu der optischen Achse der ersten Linseneinrichtung richtet, wobei die erste Linseneinrichtung ihren Brennpunkt in der Kapillare hat und so den Strahlenpfad des Laserstrahls auf einen Punkt auf der optischen Achse innerhalb der Kapillare richtet; und daß die Trenneinrichtung auch eine Diaphragma-Öffnung (62) beinhaltet, die so angeordnet ist, daß sie den von der Kapillare gestreuten Strahl entlang der optischen Achse der ersten und zweiten optischen Einrichtung durchläßt; und daß die Lichterfassungseinrichtung (60) ein einzelnes Detektorelement ist, und die erste und zweite Diaphragma-Einrichtung in der zweiten optischen Einrichtung Diaphragma-Öffnungen (62, 61) sind, die zwischen der zweiten Linseneinrichtung und dem Detektorelement angeordnet sind.

6. Analysengerät gemäß einem der Ansprüche 1 bis 5, gekennzeichnet durch eine tassenförmige Einrichtung (5) aus Glas, die eine Flüssigkeit (6) enthält, die auf eine vorbestimmte Temperatur temperaturgesteuert ist und ungefähr den gleichen Refraktionsindex wie die Kapillare bei dieser Temperatur hat, wobei in die tassenförmige Einrichtung die Kapillare angeordnet ist.

7. Analysengerät gemäß Anspruch 1, dadurch gekennzeichnet, daß die Lichterfassungseinrichtung wenigstens einen Ein-Photonen-Detektor aufweist.

8. Analysengerät gemäß Anspruch 2 oder 3, dadurch gekennzeichnet, daß die erste Diaphragma-Einrichtung verschiedene Diaphragma-Öffnungen aufweist, von denen gleichzeitig nur eine in den Strahlendurchgang bereitgestellt ist; wobei wenigstens eine der Diaphragma-Öffnungen (21 oder 22; 43, 44) in der ersten Diaphragma-Einrichtung ein NadellochDiaphragma ist, die eine transmittierende Größe von ungefähr einem Kohärenzbereich des Laserstrahls durchläßt.

9. Analysengerät gemäß Anspruch 8, dadurch gekennzeichnet, daß wenigstens eine Öffnung (45) in der ersten Diaphragma-Einrichtung auf eine Größe einstellbar ist, die eine wesentliche Anzahl von Kohärenzbereichen transmittiert, und daß die Signalverarbeitungseinrichtung geeignet ist die Anzahl von Sperma pro Volumeneinheit mit Hilfe einer Autokorellation eines Reihen-Probensignals zu berechnen, das während einer vorbestimmten Zeit aufgezeichnet wurde, die den großen Diaphragma-Bereich in einer vorbestimmten Position hat.

10. Analysengerät gemäß Anspruch 1, dadurch gekennzeichnet, daß die Signalverarbeitungseinrichtung die Trenneinrichtung steuert in Übereinstimmung mit einem Meßprogramm, um automatisch in einer vorbestimmten Reihenfolge vorgewählte Raumbereiche des Strahls, der von der Spermaprobe ausgeht, zur Aufzeichnung des Probensignals während einer vorbestimmten Zeit, bereitzustellen.

## Revendications

1. Analyseur de fécondité, comprenant :
(a) un faisceau laser (A1;34;55) tombant sur un échantillon de sperme dans un capillaire (4;35;58) ayant une section essentiellement circulaire;
(b) des premiers moyens optiques comprenant au moins un premier groupe de lentilles (8;36;57) focalisant le faisceau laser sur cet échantillon;
(c) des deuxièmes moyens optiques pour recevoir la lumière diffusée par l'échantillon de sperme, comprenant au moins un deuxième groupe de lentilles (27,28; 37,38; 52,53; 59), des premiers moyens de diaphragme optique (23,22,21; 41,48; 50,51; 62) déterminant la zone de cohérence de l'échantillon à contrôler, des deuxièmes moyens de diaphragme (32;40; zones détectrices de D1 à Dn; 61) déterminant l'angle spatial de la lumière diffusée par l'échantillon, et des moyens détecteurs de l'intensité lumineuse (30;39; D1 à Dn; 60);
(d) des moyens de séparation contenus dans la combinaison des premiers et deuxième moyens optiques extrayant par tri une petite section déterminable du faisceau sortant de l'échantillon de sperme;
(e) ces moyens de séparation étant adaptés pour extraire par tri la section du faisceau dans une direction située dans un plan ayant une symétrie spatiale par rapport au capillaire; et
(f) un dispositif de traitement des signaux (13) stockant les divers signaux en provenance des moyens de détection de la lumière pendant un temps prédéterminé, séparément pour des faisceaux sortant de l'échantillon de sperme, un au moment d'au moins deux conditions de tri choisies pour lesquelles la relation angulaire entre le faisceau incident et le faisceau trié sortant diffère d'une condition à l'autre, calculant au moins deux caractéristiques ayant rapport à la fécondité de l'échantillon de sperme,
caractérisé en ce que ces moyens de séparation comportent
(g) des moyens (23,29; 41; choix de D1 à Dn; 56) déplaçables à au moins deux emplacements prédéterminés (21,22; 43,44; 45) le long d'un trajet mobile rectiligne afin de procurer les différentes conditions de tri, une à la fois.

2. Analyseur selon la revendication 1, caractérisé en ce que les moyens de séparation comportent un deuxième groupe de lentilles (27,28; 35,41) composé d'une première partie (27;35) procurant un faisceau de lumière collimatée et suivie par une deuxième partie (28;41) procurant la focalisation du faisceau sur les moyens de détection (39), les premiers moyens de diaphragme étant prévus dans le faisceau de lumière collimatée entre la première partie et la deuxième partie du deuxième groupe de lentilles et ayant une ouverture de diaphragme (21;22; 48) pouvant être disposée sur une ligne située dans ledit plan, et en ce que les moyens de détection de la lumière (39) comprennent un élément détecteur placé sur l'axe optique du deuxième groupe de lentilles.

3. Analyseur selon la revendication 2, caractérisé en ce que les premiers moyens de diaphragme comprennent une partie jetable (46) ayant plusieurs ouvertures de diaphragme (43 à 45) prévues dans sa direction de disposition et une partie stationnaire (47) ayant des ouvertures (48′,49) adaptées aux ouvertures de diaphragme, de telle sorte que, pour chaque position sélectionnable de la première partie, toutes les ouvertures de diaphragme, sauf une, soient recouvertes vis-à-vis du faisceau sortant de l'échantillon de sperme.

4. Analyseur selon la revendication 1, caractérisé en ce que les moyens de séparation comprennent un deuxième groupe de lentilles (52,53) constitué d'une première partie, suivie d'une deuxième partie, la première partie (52) procurant une image de l'échantillon entre la première et la deuxième partie; et en ce que les premiers moyens de diaphragme (50) ont leur ouverture de diaphragme (51) au niveau de ladite image, et en ce que les moyens de détection de la lumière comportent un réseau d'éléments détecteurs (D1 à Dn) prévu le long d'une ligne parallèle au capillaire (35), chaque élément détecteur se procurant à lui-même ce deuxième diaphragme.

5. Analyseur selon la revendication 1, caractérisé en ce que les moyens de séparation comprennent un miroir (56) dans les premiers moyens optiques, prévu en oblique par rapport au trajet du faisceau sortant du laser, ce miroir dirigeant le trajet du faisceau tombant sur le premier groupe de lentilles parallèlement à l'axe optique de ce premier groupe de lentilles, ce premier groupe de lentilles ayant son foyer dans le capillaire, dirigeant ainsi le trajet du faisceau laser vers un point sur l'axe optique à l'intérieur du capillaire, et en ce que les moyens de séparation comprennent également une ouverture de diaphragme (62) placée pour laisser passer le faisceau diffusé du capillaire le long de l'axe optique des premiers et deuxièmes moyens optiques, et en ce que les moyens de détection de la lumière (60) sont constitués par un seul élément détecteur et en ce que les premiers et deuxièmes moyens de diaphragme dans les deuxièmes moyens optiques sont des ouvertures de diaphragme (62,61) disposées entre le deuxième groupe de lentilles et l'élément détecteur.

6. Analyseur selon l'une des revendications 1 à 5, caractérisé par des moyens en forme de coupe de verre (5) contenant un liquide (6) thermorégulé à une température prédéterminée et ayant le même indice de réfraction que le capillaire à cette température, le capillaire étant logé dans ces moyens en forme de coupe.

7. Analyseur selon la revendication 1, caractérisé en ce que les moyens de détection de la lumière comportent au moins un détecteur de photons les détectant un à un.

8. Analyseur selon la revendication 2 ou la revendication 3, caractérisé en ce que les premiers moyens de diaphragme comportent plusieurs ouvertures de diaphragme, dont seulement une est prévue à la fois dans le trajet du faisceau, au moins l'une de ces ouvertures de diaphragme (21 ou 22; 43,44) dans les premiers moyens de diaphragme sous forme d'un diaphragme à iris laissant une dimension de transmission d'environ une zone de cohérence du faisceau laser.

9. Analyseur selon la revendication 8, caractérisé en ce qu'on peut s'arranger pour qu'au moins une ouverture (45) dans les premiers moyens de diaphragme ait une dimension permettant de transmettre un nombre substantiel de zones de cohérence et en ce que le dispositif de traitement des signaux est adapté pour calculer le nombre de spermes par volume unitaire à l'aide d'une auto-corrélation d'échantillons de signaux série enregistrés pendant un laps de temps prédéterminé ayant cette zone de diaphragme de grande dimension dans une position prédéterminée.

10. Analyseur selon la revendication 1, caractérisé en ce que le dispositif de traitement des signaux commande les moyens de séparation en fonction d'un programme de mesure pour procurer automatiquement dans un ordre prescrit des zones spatiales préalablement choisies de ce faisceau sortant de l'échantillon de sperme pour enregistrer des échantillons de signaux pendant les laps de temps prescrits.
